(19) Europäisches Patentamt / European Patent Office / Office européen des brevets

(11) **EP 2 743 903 A2**

(12) **EUROPEAN PATENT APPLICATION**

(43) Date of publication:
**18.06.2014 Bulletin 2014/25**

(51) Int Cl.:
***G09C 5/00*** (2006.01)

(21) Application number: **13190592.9**

(22) Date of filing: **29.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.12.2012 EP 12306581**

(71) Applicant: **Thomson Licensing**
**92130 Issy-les-Moulineaux (FR)**

(72) Inventor: **Eluard, Marc**
**35690 ACIGNE (FR)**

(74) Representative: **Ståhl, Björn Niclas et al**
**Technicolor**
**1-5, rue Jeanne d'Arc**
**92443 Issy-les-Moulineaux cedex (FR)**

(54) **Method and device for 3d object encryption by application of a function modified using a secret key**

(57) A method for encrypting a 3D object. In a preferred embodiment, the encryption shapes the 3D object by generating (S21) a set of secret functions using a secret K, applying (S22) the generated functions to the 3D object, determining (S23) the function that gives an output that is closest to predetermined characteristics, encrypting (S24) the 3D object using the determined function, and outputting (S25) the encrypted 3D object and an indication of the determined function. Also provided is a corresponding decryption method, an encryption device (910) and a decryption device (940).

Figure 2

**Description**

TECHNICAL FIELD

The present invention relates generally to 3-D models and in particular to the protection of graphical objects of such models.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

The use of three-dimensional (3D) objects has been increasing in the last years, particularly with the emergence of metaverses. There are multiple usages for 3D objects: socializing worlds, games, mirroring worlds, simulation tools, but also 3D User interfaces, animation movies and visual effects for television. Generally, 3D virtual objects represent real money value. In socializing worlds and games, players are selling virtual objects or avatars to other players for real money. Building an experienced character within an online game is a very lengthy process that can require hundreds of hours behind the keyboard. The 3D model of a real-world object from a simulation tool allows manufacturing the real (counterfeit) object and selling it. Leaking the 3D model for a scene of the next blockbuster from Hollywood studios may result in bad press for the studios. As can be seen, in many cases, 3D objects are assets of great value for their owner.

Strategies for content protection comprise confidentiality protection - intended to make it impossible for unauthorized users to access the content, e.g. by encryption - and watermarking - intended to make it possible to track a user who has disseminated the content without authorization to do so.

Basic methods of 3D content protection focus on the entire data, i.e. all the data is either encrypted or watermarked (or both), although these methods are somewhat crude.

More subtle ways of protecting 3D content is to protect one or more of its 3D objects. This is possible as 3D content often is made up of a number of distinct objects positioned in a setting. When each 3D object is coded as a separate entity, it becomes possible to protect each of these separately and it is not necessary to protect all of them.

For example, US 2008/0022408 describes a method of 3D object protection by storing the "bounding box" of the object as non-encrypted data in one file and the protected 3D object as encrypted data in a separate file. Any user may access the non-encrypted data, but only authorized users can access the encrypted data; non-authorized users see a basic representation thereof (i.e. the bounding box), such as a parallelepiped instead of a car. However, this method was developed to be used with 3D rendering software and is less suited for multimedia content, such as video and film. In addition, the file format (one file with non-encrypted data and one file with encrypted data) is non-standard and is thus usable only by adapted rendering devices, not standard ones. Indeed, the encrypted data does not respect the syntax of most 3D techniques and can thus normally not be used.

US 6678378 describes a solution for protecting a 3D Computer Aided Design (CAD) object by encryption. The solution may encrypt one of the coordinate values of the nodes and the equations for the edges or the contours, by nonlinear or affine transformation, thereby distorting the 3D object or by 'normal' encryption such as RSA.

Problems with this solution is that the calculations may be costly (in particular when using RSA) and that the distortions may not be sufficient to deter a malicious user from using the content nevertheless. In addition, in the case of 'normal' encryption, the 3D object may not be readable at all by a content consuming device - such as a computer or a television - which may be a drawback in some cases.

A digital rights enabled graphics processing system was proposed in 2006 by Shi, W., Lee, H., Yoo, R., and Boldyreva, A: A Digital Rights Enabled Graphics Processing System. In GH '06: Proceedings of the 21st ACM SIGGRAPH/ EUROGRAPHICS symposium on Graphics hardware, ACM, 17-26.]. With this system, the data composing the 3D object (collection of vertices, textures) is encrypted. Their decryption is handled within the Graphic Processing Unit, under control of licenses. It is proposed also to use multi resolution meshes to deliver simultaneously a protected and unprotected version of a 3D element. Although the system itself is a real progress towards secure 3D environments, the use of protected scenes with other Virtual Reality Modelling Language (VRML) renderers will lead to interoperability issues.

David Koller and Marc Levoy describe a system for protection of 3D data in which high-definition 3D data is stored in a server. The users have access to a low-definition 3D object that they can manipulate and when a user has chosen a view, a request is sent to the server that returns a two-dimensional JPEG that corresponds to the view. Hence the high-definition 3D data is protected as it is never provided to the users. (See "Protecting 3D Graphics Content" by David Koller and Marc Levoy. Communications of the ACM, June 2005, vol. 48, no. 6.) While this system works well for its intended use, it is not applicable when the full 3D data is to be transferred to a user.

A common problem with the prior art solutions is that they are not format preserving, but that they are based on the encryption of 3D data and that they provide a second set of 3D data that is usable by non-authorized devices so that the user can see something, e.g. a bounding box.

European patent application 10305692.5 describes a format preserving solution in which a 3D object comprising a list of points (i.e. vertices) is protected by permuting the coordinates of at least some of its points. European patent application 10306250.1 describes a similar solution in which the coordinates of at least one dimension of the vertices of a 3D object are permuted independently of the other dimensions. The lists detailing how the points are connected remain unchanged, but the 3D object no longer "makes sense" as these points no longer have the initial values. Advantages of these solutions is that the protected 3D object is readable also by devices that are not able to 'decrypt' the protected 3D object - although it does look very strange - and that the protected 3D object is inscribed in a bounding box of the same size as the original 3D object.

While the latter solutions work well, it will be appreciated that there may be a need for an alternative solution that can enable protection of 3D objects with quick calculations that still enables an unauthorized content consuming device to read and display the 3D object, albeit in a manner that renders the viewing thereof unsatisfactory. The present invention provides such a solution.

SUMMARY OF INVENTION

In a first aspect, the invention is directed to a method of encrypting a graphical object. An encryption device receives the graphical object; generates a set of secret functions using a secret key $K$; selects an encryption function from the set of secret functions; encrypts the graphical object using the encryption function to obtain an encrypted graphical object; and outputs the encrypted graphical object and an indication $f$ of the selected encryption function.

In a first preferred embodiment, the selection comprises applying the functions of the set of secret functions to the graphical object to obtain a set of protected graphical objects; and selecting a function that gave a protected graphical object that satisfies a given fitness metric. It is advantageous that the encryption comprises selecting the modified graphical object that corresponds to the encryption function.

In a second preferred embodiment, the graphical object is a three-dimensional object.

In a third preferred embodiment, the set of secret functions is generated using also at least one adaptation parameter that is an intrinsic parameter of the graphical object.

In a second aspect, the invention is directed to a method of decrypting an encrypted graphical object. A decryption device receives the encrypted graphical object and an indication $f$ of an encryption function used to encrypt the encrypted graphical object; generates a decryption function using a secret key $K$ and the indication $f$; decrypts the encrypted graphical object using the decryption function to obtain a decrypted graphical object; and outputs the decrypted graphical object.

In a first preferred embodiment, the graphical object is a three-dimensional object.

In a second preferred embodiment, the decryption device receives at least one adaptation parameter, an intrinsic parameter of the graphical object, that is also used to generate the decryption function.

In a third aspect, the invention is directed to an encryption device for encrypting a graphical object. The encryption device comprises an interface configured to: receive the graphical object; and output an encrypted graphical object and an indication $f$ of a selected encryption function; and a processor configured to: generate a set of secret functions using a secret key $K$; select the encryption function from the set of secret functions; encrypt the graphical object using the encryption function to obtain the encrypted graphical object.

In a first preferred embodiment, the processor is configured to select the encryption function by: applying the functions of the set of secret functions to the graphical object to obtain a set of protected graphical objects; and selecting a function that gave a protected graphical object that satisfies a given fitness metric. It is advantageous that the processor is configured to encrypt the graphical object by selecting the modified graphical object that corresponds to the encryption function.

In a fourth aspect, the invention is directed to a decryption device for decrypting an encrypted graphical object. The decryption device comprises an interface configured to: receive the encrypted graphical object; receive an indication $f$ of an encryption function used to encrypt the encrypted graphical object; and output a decrypted graphical object; and a processor configured to: generate a decryption function using a secret key $K$ and the indication $f$; and decrypt the encrypted graphical object using the decryption function to obtain the decrypted graphical object.

In a first preferred embodiment, the graphical object is a three-dimensional object.

In a fifth aspect, the invention is directed to a non-transitory computable readable storage medium comprising stored instructions that when executed by a processor performs the method of any embodiment of the first aspect of the invention.

In a sixth aspect, the invention is directed to a non-transitory computable readable storage medium comprising stored instructions that when executed by a processor performs the method of any embodiment of the second aspect of the invention.

BRIEF DESCRIPTION OF DRAWINGS

Preferred features of the present invention will now be described, by way of non-limiting examples, with reference to the accompanying drawings, in which

Figure 1 illustrates a flow-chart of a generic method for shaping-based object encryption and decryption according to the present invention;
Figure 2 illustrates generic generation of a set of secret functions using a secret according to the present invention;
Figure 3 illustrates exemplary functions according to the present invention;
Figure 4 illustrates further exemplary functions according to the present invention;
Figure 5 illustrates exemplary partitioning according to the present invention;
Figure 6 illustrates exemplary functions taking into account properties of the input data according to the present invention;
Figure 7 illustrates the protection of an object once a secret function has been selected according to the present invention;
Figure 8 illustrates the deprotection of an object once a secret function has been regenerated according to the present invention; and
Figure 9 illustrates a system for encrypting and decrypting a digital object such as a 3D object according to a preferred embodiment of the present invention.

DESCRIPTION OF EMBODIMENTS

In most 3D content formats, such as for example Virtual Reality Modelling Language (VRML) and X3D, a 3D graphical object **o** ("3D object") is represented by a first list (or array) of vertices, referred to as the "geometry", wherein each vertex $\mathbf{v}=(x, y, z)$ consists of 3D coordinates, and a second list of facets, referred to as the "topology" or the "connectivity", which indicates how to link the points together to define the facets that the 3D object is made of.
A salient inventive idea of the present invention is to protect a 3D object by using a function with at least one parameter to warp the dimension space, which in a preferred embodiment 'shapes' the 3D object, i.e. gives a desired statistical characteristic to the protected 3D object. A secret is used to define the at least one parameter of the function.
In other words, where some of the prior art solutions obtain a protected vertex by applying a function to a key and an input point, the present invention obtains a protected point by using a key to select a function that is applied to an input point. It should however be noted that the key K may also be used as input to the function f'.
The protection results in the creation of a new set of vertices, yielding a protected 3D object than can still be understood by any standard legacy 3D rendering application, but whose resulting display becomes distorted compared to the original. Authorized users with access to the secret are able to reverse the protection so as to obtain the original points. The function that is used to 'shape' the 3D object is advantageously chosen from a set of dynamically generated functions.

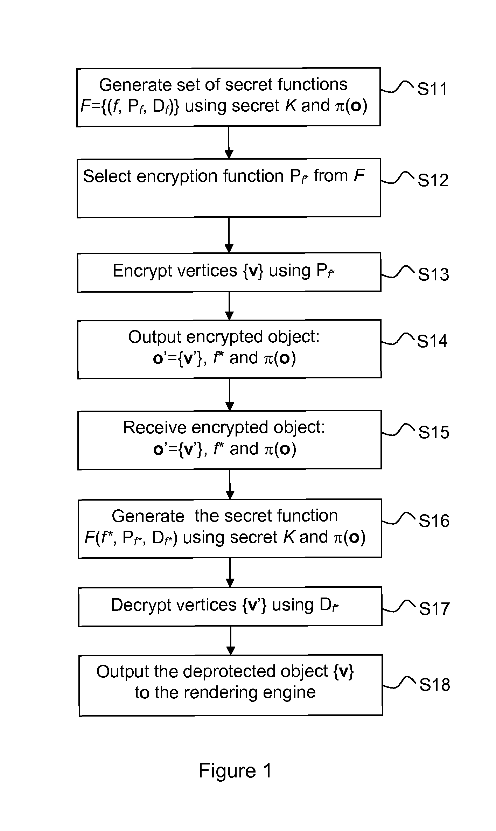

Figure 1 illustrates a flow-chart of a generic method for shaping-based object encryption and decryption. A secret K is used to generate a set of secret functions composed of triplets $F=\{(f, P_f, D_f)\}$ S11, where $f \in [1:N_F]$ is an integer index, $P_f$ is a protection function and $D_f$ the associated deprotection function. In each triplet, the two functions are related by the relationship $D_f \bigcirc P_f = \text{Id}$. This generation process will be fully detailed afterward and usually implicitly assumes the knowledge of some intrinsic parameters $\pi(\mathbf{o})$ of the original object **o**, e.g. the bounding box. A selection module then determines S12 which protection function $P_{f^*}$ shall be applied to encrypt the coordinates defining the vertices $\mathbf{v}_v=(x_v, y_v, z_v)$ of the 3D object. This selection may be completely pseudo-random or accommodate to some intrinsic features of the object **o** in order to yield some very specific (statistical) properties, as will be detailed hereinafter. Once the index $f^*$ to be used has been identified, the vertices of the object are encrypted using the associated protection function S13 to obtain the encrypted vertices $\mathbf{v}_v'=(x_v', y_v', z_v')=P_{f^*}(x_v, y_v, z_v)=P_{f^*}(\mathbf{v}_v)$. Eventually, the protection module outputs S14 the protected object $\mathbf{o}'=\{\mathbf{v}'\}$, the index $f^*$ used for protection, and adaptation parameters $\pi(\mathbf{o})$, i.e. the intrinsic parameters $\pi(\mathbf{o})$ that impacted the encryption function, since these may not be exactly derived from the protected object. It should be noted that the function identifier $f^*$ and the associated adaptation parameters $\pi(\mathbf{o})$ can be sent using various techniques known in the art, depending e.g. on the desired level of security, such as for example:

- transported in the clear with the content in non-interpreted sections of a content file (for example in a METADATA field in the example of VRML),
- encapsulated in a license transported with the content, and
- transported out of band within a license file.

On the receiver side, a deprotection module receives S15 the protected object $\mathbf{o'}=\{\mathbf{v'}\}$, the index $f^*$ used for protection, and the intrinsic parameters $\pi(\mathbf{o})$. Using the secret $K$ and the parameters $\pi(\mathbf{o})$, the receiver generates S16 the secret function $(f^*, P_{f^*}, D_{f^*})$, identical to the one generated by the emitter. Subsequently, the receiver decrypts the protected object $\mathbf{o'}$ S17 by applying the deprotection function $D_{f^*}$ to the coordinates of the vertices $\mathbf{v}=D_{f^*}(\mathbf{v'})=D_{f^*}\bigcirc P_{f^*}(\mathbf{v})=\mathrm{Id}(\mathbf{v})$. Finally, the recovered object $\mathbf{o}=\{\mathbf{v}\}$ is output, e.g. sent to the rendering engine for display S18 or stored.

Function Set Generation

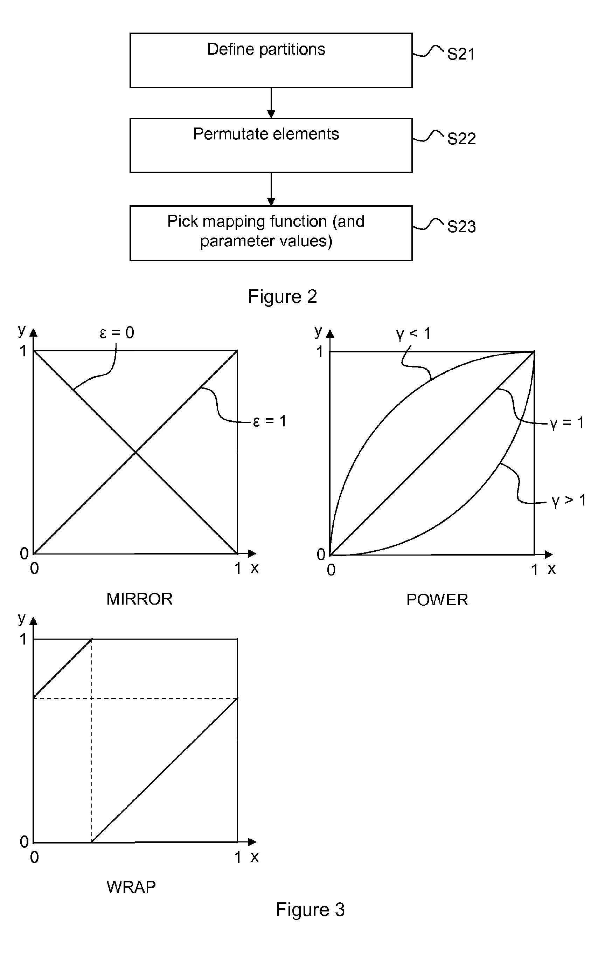

Figure 2 depicts the workflow of a generic strategy for generating a set of secret functions $F=\{(f, P_f, D_f)\}$ using a secret $K$, and possibly some intrinsic parameters $\pi(\mathbf{o})$ of the original object $\mathbf{o}$. Using the secret $K$, the function index $f$ and possibly the parameters $\pi(\mathbf{o})$, the first step S21 defines two partitions $A_f=\{A_{f,p}\}$ and $B_f=\{B_{f,p}\}$ of the bounding $B(\mathbf{o})$, the two partitions having the same number of elements $N_p$. Subsequently, possibly using the secret $K$, a permutation $\sigma_f()$ is defined S22 in order to associate each element $A_{f,p}$ of the partition $A_f$ to another element $B_{f,\sigma f(p)}$ of the partition $B_f$ in a bijective manner.

At this stage, the objective is to define for each partition index $p$ a function $m_{f,p}()$ that maps S23 the vertices of the object $\mathbf{o}$ contained in $A_{f,p}$ onto $B_{f,\sigma f(p)}$. These mapping functions need to be injective or bijective functions to ensure uniqueness of the transformed values. It should be noted that theoretically injective functions may yield many-to-one mappings due to insufficient numerical precision. Moreover, these mapping functions can be decomposed in three components $m_{f,p}=c_{f,p}\bigcirc b_{f,p}\bigcirc a_{f,p}$, where:

1. $a_{f,p}()$ is a function which maps the original partition element $A_{f,p}$ onto a reference volume e.g. the unit cube or the unit sphere;
2. $b_{f,p}()$ is a warping function that preserves the reference volume, e.g. points in the unit cube (resp. sphere) remain in the unit cube (resp. sphere); and
3. $c_{f,p}()$ is a function which maps the reference volume onto the protected partition element $B_{f,\sigma f(p)}$.

The functions $a_{f,p}()$ and $c_{f,p}()$ are fully determined by the partitioning defined in S21 and the permutation defined in S22. The warping function $b_{f,p}()$ can be selected from a pre-determined family of parameterised warping functions $W=\{w_w()\}$ and the parameters of the pseudo-randomly selected function set using the secret $K$.

This function set generation process essentially has 3 degrees of freedom, namely (i) the set of partitions $A_f$ and $B_f$, (ii) the permutations $\sigma_f()$, and (iii) the set of warping functions $W$ and the associated parameter values. Depending on the targeted security level and/or distortion level and/or computational efficiency, the system designer may decide not to exploit the full variability permitted by this generic design and fix some of the parameters e.g. using the same $K$-dependent partitions $A$ and $B$ for all functions in the set $F$.

The whole function set generation process will be exemplified hereafter with a number of preferred embodiments. For the sake of clarity, the 1-dimensional case is first detailed at length prior to a description of how it can be extended to multi-dimensional case.

The 1-D case

In this scenario, the object $\mathbf{o}$ is a set of scalar values $\{x_v\}$ and the bounding box $B(\mathbf{o})$ is the segment $[L, R]=[\min_v x_v, \max_v x_v]$. The first step consists in generating two partitions $A_f$ and $B_f$ made of $N_p$ elements. In a first embodiment, this is done by seeding a pseudo-random numbers generator (PRNG) with $K+2.f$ (resp. $K+2.f+1$), drawing $N_p-1$ numbers uniformly distributed over $]L, R[$, and sorting them to yield $a_1<a_2<...<a_{Np-1}$ (resp. $b_1<b_2<...<b_{Np-1}$). The different elements of the partition $A_f$ (resp. $B_f$) are then defined as $A_{f,p}=[a_{p-1}, a_p]$ (resp. $B_{f,p}=[b_{p-1}, b_p]$), with $a_0=b_0=L$ and $a_{Np}=b_{Np}=R$. In a second embodiment, the partitioning operation is determined by some characteristics of the object $\mathbf{o}$. In this case, additional information may need to be transmitted to the receiver through $\pi(\mathbf{o})$ in order to guarantee that the recipient is able to replicate these operations even if the protection operation perturbs the statistics that the partitioning process rely on. For instance, the boundaries of the segments $A_{f,p}$ can be chosen at the location where the density of vertices is highest in an attempt to strongly impact the rendering of the object. In this case, these boundaries may need to be forwarded to the recipient as it may be unfeasible to retrieve them exactly from the protected object $\mathbf{o'}$.

The second step generates a permutation $\sigma_f()$ to associate unequivocally elements from $A_f$ to elements from $B_f$. This can be done using any state-of-the-art technique e.g. using a lookup table generated by a PRNG seeded with a secret derived from $K$ and the function index $f$.

The third step is in charge of defining the mapping functions $m_{f,p}=c_{f,p}\bigcirc b_{f,p}\bigcirc a_{f,p}$. The mapping function $a_{f,p}()$ and $c_{f,p}()$ are already determined by the partitioning and permutation operations and can be expressed as follows in the 1-dimensional case:

$$a_{f,p}(): \quad A_{f,p}=[a_{f,p-1}, a_{f,p}] \to [0, 1]$$

$$x \mapsto y=(x-a_{f,p-1})/(a_{f,p}-a_{f,p-1})$$

and

$$c_{f,p}(): \quad [0, 1] \to B_{f,\sigma f(p)}=[b_{f,\sigma f(p)-1}, b_{f,\sigma f(p)}]$$

$$x \mapsto y=(b_{f,\sigma f(p)}-b_{f,\sigma f(p)-1}).x + b_{f,\sigma f(p)-1}$$

Deriving the inverse functions for $a_{f,p}()$ and $c_{f,p}()$ is straightforward.

The only thing left to define is the warping function $b_{f,p}()$: $[0, 1] \to [0, 1]$. Any injective function respecting this constraint of domain definition can be used. A few examples are provided below:

$$\text{MIRROR:} \quad [0, 1] \to [0, 1]$$

$$x \mapsto y=\varepsilon.x + (1-\varepsilon).(1-x), \ \varepsilon\in\{0,1\}$$

$$\text{POWER:} \quad [0, 1] \to [0, 1]$$

$$x \mapsto y=x^{\gamma}, \ \gamma>0$$

$$\text{WRAP:} \quad [0, 1] \to [0, 1]$$

$$x \mapsto y=x+\kappa - \lfloor x+\kappa \rfloor, \ \kappa\in[0, 1]$$

The skilled person will appreciate that variants are possible, for example it is possible to use "WRAP" with more than one 'cut' along each axis.

Figure 3 illustrates the effect of each of these functions. Using the secret *K,* the parameter value of these functions can be pseudo-randomly drawn for each element of the partition. Moreover, the same function (or combination of functions) can be used for each element of the partition. Alternatively, the function (or combination of functions) can be pseudo-randomly selected using the secret *K* for each element of the partition. It should be noted that inversing these functions $b_{f,p}()$ is also straightforward.

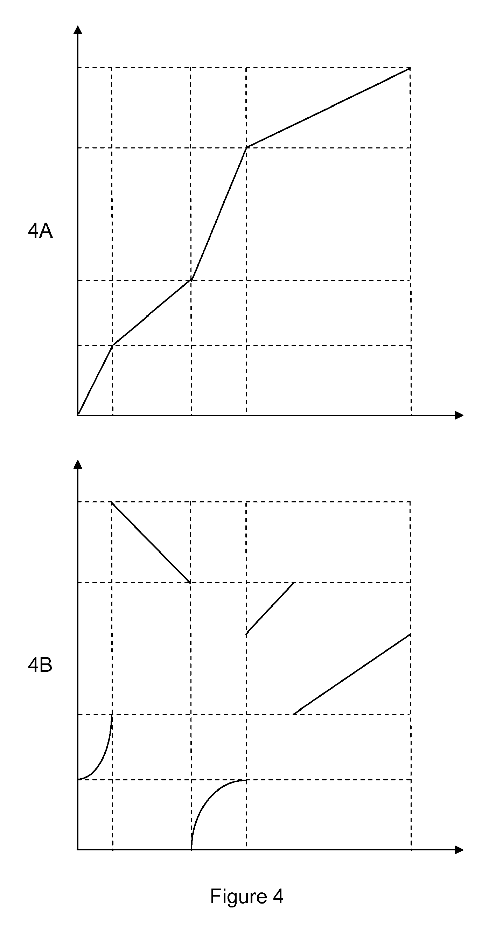

Figure 4 shows the type of function that can be obtained. In the first example (4A), the partitioning is pseudo-random, the permutation $\sigma()$ is set to the identity, the warping function $b_{f,p}()$ is reduced to POWER degenerated using $\gamma=1$ to the identity. It can be clearly seen that it results in a function that is overall linear by segment. The second example (4B) illustrates what kind of function can be obtained when the diversity of the proposed system is fully exploited.

Extension to the multidimensional case

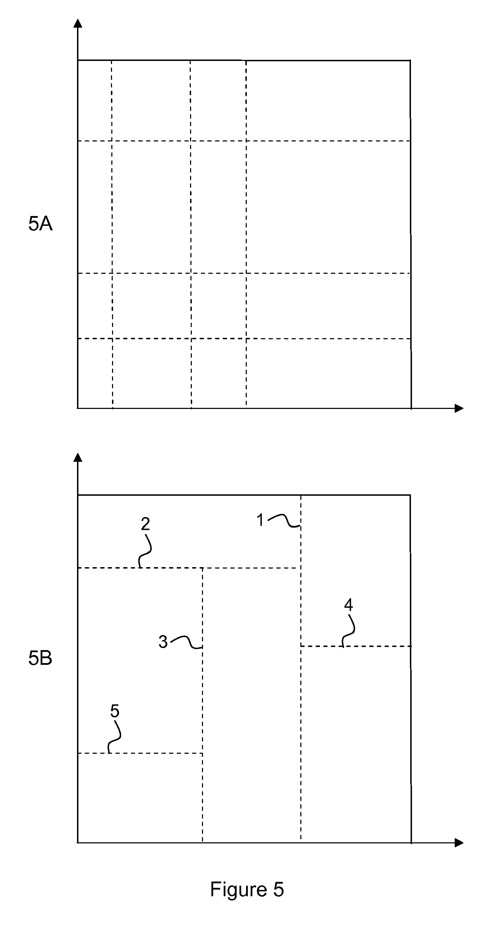

In the case of 3D objects $\mathbf{o}=\{(x_v, y_v, z_v)\}$, a first straightforward embodiment consists in applying the system for 1D object previously described to each dimension independently. An example of this is given for the 2D case by 5A in Figure 5. It should be noted that it is preferred that specific care is required to guarantee that the PRNG is not seeded twice with the same secret derived from *K* for security purposes.

An alternate embodiment for the partitioning operation consists in iteratively splitting the largest partition element in two using a hyperplane aligned with one of the directions of the canonical coordinate system until the partition contains the desired number of elements $N_p$. The partition is initialized with the whole bounding box B($\mathbf{o}$). An example of this partitioning strategy is illustrated in the 2D case by 5B in Figure 5 - the order of the partitions has been illustrated to facilitate comprehension.

An alternate embodiment for the mapping function is to consider functions that cannot be reduced to individual functions operating independently along each dimension. For instance, a point $\mathbf{p}$ in the unit hypercube can be represented by the radius $\rho$ to the center $\mathbf{c}$ of the cube C and the unit direction $\mathbf{d}=(\mathbf{p}-\mathbf{c})/\|\mathbf{p}-\mathbf{c}\|$. The warping functions defined in the 1D case can then be applied to $\rho$. In order to guarantee that the protected points remain in the hypercube it is necessary to normalize $\rho$ so that it lies in [0, 1] by dividing by a normalization factor $\rho_n$ e.g. the half-length of the cube diagonal ($\rho_n=\sqrt{3}/2$) or the maximum radius ($\rho_n=\max\{\rho|\mathbf{c}+\rho\mathbf{d}\in C\}$). The protected point is then obtained by $\mathbf{p}'=\mathbf{c}+\rho_n.m_{f,p}(\rho/\rho_n).\mathbf{d}$. Similarly, the unit cube being invariant to rotations by multiples of $\pi/2$ around the canonical axis, such warping functions could also be used. The advantage of such multidimensional functions is that the information is distributed over all dimensions, hence providing additional security.

The function selection process

In a first embodiment, all secret functions $\{(f, P_f, D_f)\}$ are applied to the object $\mathbf{o}$ in order to obtain $N_F$ protected objects $\mathbf{o}_f'$. The selection process then identifies the secret function which best satisfies (i.e. minimizes or maximizes) some fitness metric. Keeping in mind that the motivation of this protection technique is to distort the rendering of the object, one may want for instance to isolate the function which maximizes the distortion D() between the two 3D objects $\mathbf{o}$ and $\mathbf{o}_f'$, i.e. $f^*=\arg \max_f D(\mathbf{o}, \mathbf{o}_f')$, where the distortion function can be any standard metric used to evaluate the geometrical distortion between two clouds of points e.g. the Hausdorff distance.

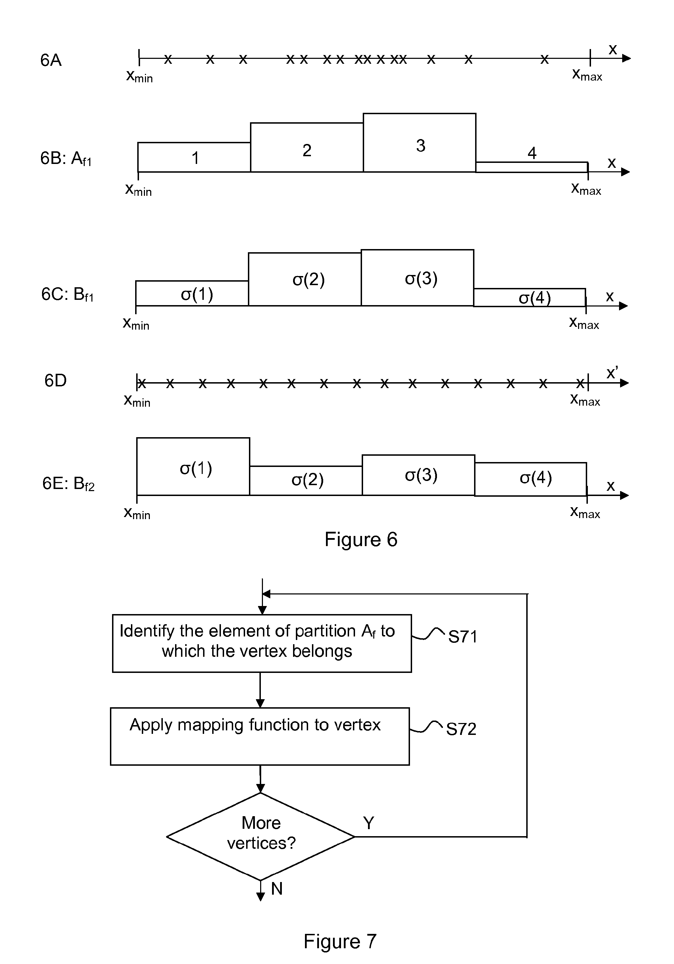

In view of the computations required to generate $N_F$ protected objects, it is useful to have alternate strategies for scalability reasons. In another embodiment, the selection process is guided by the intrinsic properties of the object o and the characteristic of the secret functions $\{(f, P_f, D_f)\}$. For instance, for each function, one could compute a correlation score between (i) the proportion of vertices contained in each element of the partition $A_f$ and (ii) the volume of each element of the partition $B_f$. By selecting the function having the highest correlation score, the selection process isolate the function which will spread the vertices of the object $\mathbf{o}$ the most evenly in the bounding box B($\mathbf{o}$). Figure 6 illustrates this concept in one dimension. 6A illustrates the distribution of input data, 6B illustrates the occurrences of the input data in each of four elements of partition $A_{f1}$, 6C illustrates how the volume of each element of partition in $B_{f1}$ can be chosen to generate smoothed output data illustrated by 6D, and 6E illustrates a partition $B_{f2}$.

The object protection process

Figure 7 depicts the generic workflow to protect an object $\mathbf{o}$ made of $N_v$ vertices $\mathbf{v}_v$ once the secret function $(f^*, P_{f^*}, D_{f^*})$ has been selected. The process loops through all the vertices of the object. For each vertex, the first step identifies S71 to which element $A_{f^*,p^*}$ of the partition $A_{f^*}$ the vertex $\mathbf{v}_v$ belongs to. Then, the mapping function $m_{f^*,p^*}()$ is applied S72 to the vertex to obtain the protected vertex $\mathbf{v}_v'=m_{f^*,p^*}(\mathbf{v}_v)$.

The object deprotection process

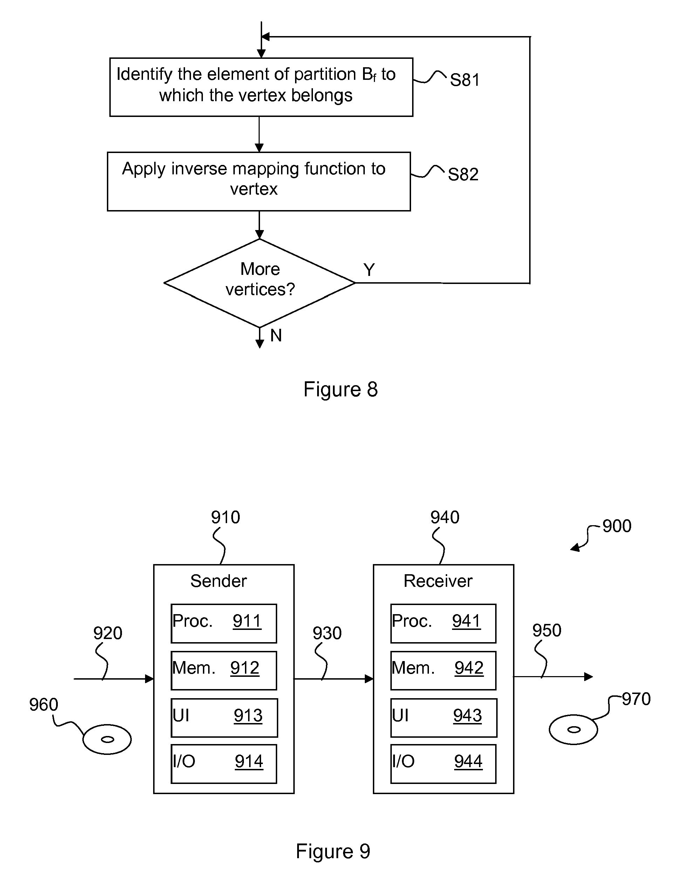

Figure 8 depicts the generic workflow to deprotect an object $\mathbf{o}'$ made of $N_v$ vertices $\mathbf{v}_v'$ once the secret function $(f^*, P_{f^*}, D_{f^*})$ has been regenerated. The process loops through all the vertices of the protected object. For each vertex, the first step identifies S81 to which element $B_{f^*,p^*}$ of the partition $B_{f^*}$ the vertex $\mathbf{v}_v'$ belongs to. Then, the inverse of the mapping function $m_{f^*,p^*}()$ is applied S82 to the vertex to obtain the deprotected vertex $\mathbf{v}_v=inv\_m_{f^*,p^*}(\mathbf{v}_v')$.

Figure 9 illustrates a system 900 for encrypting and decrypting a digital object such as a 3D object according to a preferred embodiment of the present invention. As a non-limitative example, the points correspond to the vertices of the surfaces composing the graphical object and are expressed in 3D coordinates. The transformation may be performed on the static part (Coordinate node in VRML syntax) or the animation part (CoordinateInterpolator node in VRML syntax), or preferably both. In other words, it is the representation of the 3D object that is protected, which makes the correct rendering of the object impossible.

The system 900 comprises a sender 910 and a receiver 940, each comprising at least one processor 911, 941, memory 912, 942, preferably a user interface 913, 943, and at least one input/output unit 914, 944. The sender 910 may for example be a personal computer or a workstation, while the receiver 920 for example may not only be a personal computer or a workstation, but also a television set, a video recorder, a set-top box or the like.

The sender 910 is configured to receive a 3D object via connection 920, encrypt the 3D object using a method according to any of the embodiments described herein, and send the encrypted 3D object to the receiver 940 via connection 930. The receiver 940 is configured to receive an encrypted 3D object via connection 930, decrypt the encrypted 3D object using a method corresponding to the encryption method according to any of the embodiments described herein, and output or render the decrypted 3D object, possibly via connection 950.

It will be appreciated that 'connection' is to be interpreted in a broad sense. As such, it may for example cover storage on a recording medium that is then transferred.

Figure 9 also illustrates non-transitory computer-readable storage media 960, 970 storing instructions that, when executed by a processor, respectively perform encryption and decryption according to any of the embodiments described herein.

While the invention has been described for three dimensions, it may also be applied to encrypt objects of other dimensions, not only two but also any number of dimensions above three.

It will thus be appreciated that the present invention can provide a mechanism for ensuring the confidentiality of digital objects such as 3D models, and that the mechanism can visually differentiate protected and non-protected models for non-authorized users. It will also be appreciated that the protected 3D object (and the scene comprising the 3D object) can always be rendered, although it will be more or less recognizable.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of encrypting a graphical object, the method comprising the steps, in an encryption device (910), of:

   - receiving the graphical object;
   - generating (S11) a set of secret functions using a secret key $K$;
   - selecting (S12) an encryption function from the set of secret functions;
   - encrypting (S13) the graphical object using the encryption function to obtain an encrypted graphical object; and
   - outputting (S14) the encrypted graphical object and an indication $f$ of the selected encryption function.

2. The method of claim 1, wherein the selecting step comprises the steps of:

   - applying the functions of the set of secret functions to the graphical object to obtain a set of protected graphical objects; and
   - selecting a function that gave a protected graphical object that satisfies a given fitness metric.

3. The method of claim 2, wherein the encryption step comprises selecting the modified graphical object that corresponds to the encryption function.

4. The method of claim 1, wherein the graphical object is a three-dimensional object.

5. The method of claim 1, wherein the set of secret functions is generated using also at least one adaptation parameter $\pi(\mathbf{o})$ that is an intrinsic parameter of the graphical object.

6. A method of decrypting an encrypted graphical object, the method comprising the steps, in a decryption device (940), of:

   - receiving (S15) the encrypted graphical object;
   - receiving (S15) an indication $f$ of an encryption function used to encrypt the encrypted graphical object;
   - generating (S16) a decryption function using a secret key $K$ and the indication $f$;
   - decrypting (S17) the encrypted graphical object using the decryption function to obtain a decrypted graphical object; and
   - outputting (S18) the decrypted graphical object.

7. The method of claim 5, wherein the graphical object is a three-dimensional object.

8. The method of claim 5, further comprising receiving at least one adaptation parameter and wherein the decryption function is generated using also the at least one adaptation parameter $\pi(\mathbf{o})$ that is an intrinsic parameter of the graphical object.

9. An encryption device (910) for encrypting a graphical object, the encryption device (910) comprising:

an interface (914) configured to:

- receive the graphical object; and
- output an encrypted graphical object and an indication $f$ of a selected encryption function; and

a processor (911) configured to:

- generate a set of secret functions using a secret key $K$;
- select the encryption function from the set of secret functions;
- encrypt the graphical object using the encryption function to obtain the encrypted graphical object.

10. The encryption device of claim 9, wherein the processor (911) is configured to select the encryption function by:

- applying the functions of the set of secret functions to the graphical object to obtain a set of protected graphical objects; and
- selecting a function that gave a protected graphical object that satisfies a give fitness metric.

11. The encryption device of claim 10, wherein the processor (911) is configured to encrypt the graphical object by selecting the modified graphical object that corresponds to the encryption function.

12. A decryption device (940) for decrypting an encrypted graphical object, the decryption device (940) comprising:

an interface (944) configured to:

- receive the encrypted graphical object;
- receive an indication $f$ of an encryption function used to encrypt the encrypted graphical object; and
- output a decrypted graphical object; and

a processor (941) configured to:

- generate a decryption function using a secret key $K$ and the indication $f$;
- decrypt the encrypted graphical object using the decryption function to obtain the decrypted graphical object.

13. The decryption device of claim 12, wherein the graphical object is a three-dimensional object.

14. A non-transitory computable readable storage medium (960) comprising stored instructions that when executed by a processor performs the method of any one of claims 1 to 5.

15. A non-transitory computable readable storage medium (970) comprising stored instructions that when executed by a processor performs the method of any one of claims 6 to 8.

Generate set of secret functions
$F=\{(f, P_f, D_f)\}$ using secret $K$ and $\pi(\mathbf{o})$     S11

Select encryption function $P_{f^*}$ from $F$     S12

Encrypt vertices $\{\mathbf{v}\}$ using $P_{f^*}$     S13

Output encrypted object:
$\mathbf{o}'=\{\mathbf{v}'\}$, $f^*$ and $\pi(\mathbf{o})$     S14

Receive encrypted object:
$\mathbf{o}'=\{\mathbf{v}'\}$, $f^*$ and $\pi(\mathbf{o})$     S15

Generate the secret function
$F(f^*, P_{f^*}, D_{f^*})$ using secret $K$ and $\pi(\mathbf{o})$     S16

Decrypt vertices $\{\mathbf{v}'\}$ using $D_{f^*}$     S17

Output the deprotected object $\{\mathbf{v}\}$
to the rendering engine     S18

Figure 1

Figure 2

MIRROR

POWER

WRAP

Figure 3

Figure 4

Figure 5

6A

6B: $A_{f1}$

6C: $B_{f1}$

6D

6E: $B_{f2}$

Figure 6

Identify the element of partition $A_f$ to which the vertex belongs — S71

Apply mapping function to vertex — S72

More vertices? Y

N

Figure 7

Identify the element of partition $B_f$ to which the vertex belongs　　S81

Apply inverse mapping function to vertex　　S82

More vertices?　Y

N

Figure 8

910　　　　　　　　940　　　　　　　　900

Sender

| Proc. | 911 |

| Mem. | 912 |

| UI | 913 |

| I/O | 914 |

920

Receiver

| Proc. | 941 |

| Mem. | 942 |

| UI | 943 |

| I/O | 944 |

930　　　950

960　　　970

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080022408 A
- US 6678378 B
- EP 10305692 A
- EP 10306250 A

### Non-patent literature cited in the description

- **SHI, W. ; LEE, H. ; YOO, R. ; BOLDYREVA, A.** A Digital Rights Enabled Graphics Processing System. *GH '06: Proceedings of the 21st ACM SIGGRAPH/ EUROGRAPHICS symposium on Graphics hardware,* 2006, 17-26